(19) Europäisches Patentamt

European Patent Office

Office européen des brevets

(11) **EP 1 040 366 B1**

(12) **EUROPÄISCHE PATENTSCHRIFT**

(45) Veröffentlichungstag und Bekanntmachung des Hinweises auf die Patenterteilung:
**08.10.2003   Patentblatt 2003/41**

(21) Anmeldenummer: **98962257.6**

(22) Anmeldetag: **14.11.1998**

(51) Int Cl.⁷: **G01S 17/89**, G01S 17/10

(86) Internationale Anmeldenummer:
**PCT/DE98/03344**

(87) Internationale Veröffentlichungsnummer:
**WO 99/034235 (08.07.1999 Gazette 1999/27)**

(54) **VERFAHREN UND VORRICHTUNG ZUR AUFNAHME EINES DREIDIMENSIONALEN ABSTANDSBILDES**

METHOD AND DEVICE FOR RECORDING THREE-DIMENSIONAL DISTANCE-MEASURING IMAGES

PROCEDE ET DISPOSITIF POUR LA PRISE D'UNE VUE TRIDIMENSIONNELLE PERMETTANT LA MESURE D'UNE DISTANCE

(84) Benannte Vertragsstaaten:
**DE FR GB IT**

(30) Priorität: **23.12.1997  DE 19757595**
         **23.07.1998  DE 19833207**

(43) Veröffentlichungstag der Anmeldung:
**04.10.2000   Patentblatt 2000/40**

(73) Patentinhaber: **SIEMENS AKTIENGESELLSCHAFT**
**80333 München (DE)**

(72) Erfinder:
• **MENGEL, Peter**
  **D-82223 Eichenau (DE)**
• **DOEMENS, Günter**
  **D-83607 Holzkirchen (DE)**

(56) Entgegenhaltungen:
**EP-A- 0 363 735          EP-A- 0 465 806**
**WO-A-97/11353**

**Beschreibung**

Verfahren und Vorrichtung zur Aufnahme eines dreidimensionalen Abstandsbildes

Die Erfindung betrifft ein Verfahren und eine Vorrichtung zur Aufnahme eines dreidimensionalen Abstandsbildes von räumlichen Objekten.

Dreidimensional aufnehmende und verarbeitende Sensorsysteme gewinnen für verschiedenste Aufgabenstellungen in der industriellen Technik zunehmend an Bedeutung. Bekannte optische Radarsysteme, wie beispielsweise Laserradar basieren entweder auf dem Prinzip der Laserimpuls-Laufzeitmessung oder auf der Bestimmung der Phasendifferenz von moduliertem Laserlicht zur Ableitung der Objektdistanz. Zum Aufbau eines dreidimensionalen bildgebenden Systemes sind zusätzliche mechanische Scaneinrichtungen erforderlich. Dies führt zu einem relativ teuren elektronischen und mechanischen Aufwand, der den Einsatz solcher dreidimensionalen Systeme auf wenige Spezialanwendungen beschränkt.

Es sind Verfahren bekannt, die eine CCD-Kamera (Charged Coupled Device) einsetzen, wobei für diese Halbeleiterkameras die Fernseh(TV)- Norm herangezogen wird. Somit lassen sich lediglich relativ lange Auslesezeiten erzielen.

Der Erfindung liegt die Aufgabe zugrunde, ein Verfahren zur Aufnahme eines dreidimensionalen Abstandsbildes, sowie eine Vorrichtung dazu zur Verfügung zu stellen, womit ein schnelles und kostengünstiges Verfahren zur Gewinnung eines dreidimensionalen Abstandsbildes für räumliche Objekte ohne aufwendige mechanische Einrichtungen bereitgestellt wird.

Die Lösung dieser Aufgabe geschieht durch die Merkmale des Anspruchs 1, 2 bzw. des Anspruches 23.

Der Erfindung liegt die Erkenntnis zugrunde, daß unter Einsatz eines bildpunktauflösenden (pixelauflösenden) und wahlfrei auslesbaren optoelektronischen Sensors, dessen Integrationszeit punktweise einstellbar ist, eine extrem schnelle Bildaufnahme eines dreidimensionalen Abstandsbildes möglich ist. Dazu wird das Objekt mit einem oder mehreren sehr kurzen Lichtimpulsen beleuchtet, woraufhin Lichtimpulse der gleichen Länge vom Objekt zurückgestreut werden. Diese zurückgestreuten Lichtimpulse werden über eine entsprechende Optik auf den optoelektronischen Chip geleitet. Aufgrund der unterschiedlichen Abstände unterschiedlicher Objektpunkte vom Sensor werden mit jeweiligen Orten korrespondierende zurückgestreute Lichtimpulse zu jeweils unterschiedlichen Zeiten am Sensor ankommen. Für eine Abstandsmessung wird ein Zeitmeßfenster geöffnet, dessen Zeitdauer einer vorbestimmbaren Integrationszeit entspricht. Die Integrationszeit ist kleiner oder gleich der Länge der ausgesandten und damit auch der Länge der reflektierten Lichtimpulse. Somit ist sichergestellt, daß am Ende der Integrationszeit ein einheitliches Abschneiden der zurückgestreuten Lichtimpulse am Sensor erfolgt. Die zeitverzögert eintreffenden Lichtimpulse je Bildpunktelement werden hinten abgeschnitten, so daß aufgrund der unterschiedlichen Ladungen im Raster des optoelektronischen Sensors die unterschiedlichen Laufzeiten in Ladungsunterschiede umgesetzt werden können. Daraus läßt sich ein dreidimensionales Abstandsbild errechnen.

Die Erfindung kann auch derart gestaltet sein, daß anstelle eines Lichtimpulses mit definierter Länge lediglich ein Lichtintensitätsanstieg mit steiler Flanke Verwendung findet, der entsprechend am Sensor aufgenommen und ausgewertet wird. Dadurch wird das Meßergebnis unabhängig vom Verlauf der abfallenden Flanke des Lichtimpulses. Zum anderen kann der Einfluß eines Dunkelstromes,der beispielsweise durch die Betriebswärme eines Sensorelementes erzeugt wird, sowie der Anteil des Umgebungslichtes (Störlicht) exakt für jeden Bildpunkt kompensiert werden. Durch insgesamt drei aufeinanderfolgende Messungen werden zunächst der Dunkelstrom und das Umgebungslicht erfaßt, danach werden in Zusammenhang mit einer Belichtung die vom Objekt reflektierten und am Sensor empfangenen Lichtmengen in Form des Sensorsignales integriert, was anschließend mit einer höheren Integrationszeit wiederholt wird. Daraus läßt sich durch entsprechende Interpolation die Laufzeit des Lichtes für jeden Objektpunkt ermitteln. Dies eröffnet die Verwendung von geringeren Lichtleistungen bei gleichzeitig genauer Messung der Laufzeit und damit der Entfernung zum Objekt.

In einer vorteilhaften Ausgestaltung der Erfindung werden mit einer sehr langen Integrationszeit sämtliche Lichtimpulse gleichzeitig mit der zuerst beschriebenen Messung oder zeitversetzt danach mit ihrer vollständigen Länge aufgenommen. Dies wird zur Normierung benutzt, so daß Unterschiede im Reflexionsverhalten des Objektes erkannt und ausgeglichen werden können.

Weitere vorteilhafte Ausgestaltungen können den Unteransprüchen entnommen werden.

Die wesentlichen Vorteile der Erfindung liegen darin, daß beispielsweise mechanische Shutter entfallen. Es können extrem kurze Bildaufnahmezeiten realisiert werden. Der verwendete optoelektronische Sensor wird allgemein als CMOS-Sensor bezeichnet, wobei dies lediglich die technologische Bezeichnung des Halbleiterbauelementes ist. Mit einem derartigen Sensor lassen sich minimale Integrationszeiten von 50 bis 30 nsec realisieren (Jitter bei weniger als 0,1 %) . Die technische Entwicklung schreitet bei den Integrationszeiten noch voran.

Im folgenden werden anhand von schematischen Figuren Ausführungsbeispiele beschrieben.

Figur 1 zeigt das Funktionsprinzip zur Erfassung eines dreidimensionalen Abstandsbildes mit einem CMOS-Sensor,

Figur 2 zeigt die schematische Darstellung einer zeitlichen Verschiebung zweier Lichtimpulse deren zugehörige Objektpunkte einen unterschlichen Abstand zum CMOS-Sensor besitzen, relativ zu Integrationsfenstern,

Figur 3 zeigt zwei Varianten des Sensors zur gleichzeitigen Erfassung von dreidimensionalen Abstandsbildern und Intensitäts- bzw. Grauwertbildern mit einem CMOS-Sensor,

Figur 4 zeigt die schematische Darstellung der Fahrzeuginnenraumüberwachung mit einem dreidimensionalen CMOS-Sensor.

Figur 5 zeigt die Entfernungsmessung mit integrierendem CMOS-Bildsensor, wobei das Signal der sendeseitigen Laserdiode und die empfangsseitigen Sensorsignale dargestellt sind,

Figur 6 zeigt die Entfernungsmessung mit integrierendem CMOS-Bildsensor, wobei in Figur 6a der sendeseitige Betrieb einer Laserdiode und in Figur 6b die durch fortlaufende Integration am Sensor erzielten Sensorsignale dargestellt sind,

Figur 7 zeigt in zeitlicher Korrelation die Zusammenhänge zwischen sendeseitiger Beleuchtung und empfangsseitiger Detektion eines Laserimpulses, wobei die in der Figur 7 unten dargestellten Meßsignale in Verbindung mit einer kurzen Integrationszeit und einer sehr langen Integrationszeit dargestellt werden,

Figur 8 zeigt in zeitlicher Korrelation die sende- und empfangsseitige Darstellung eines Laserimpulses, wobei auf die Beleuchtungssteuerung des Sensors bezogen zwei unterschiedliche kurze. Integrationszeiten vorgesehen sind.

Es wird ein Verfahren zur seriellen oder gleichzeitigen Erfassung bzw. Erzeugung eines Intensitäts- und eines dreidimensionalen Abstandsbildes räumlicher Objekt mit einem optoelektronischen Sensor unter Kurzzeitbelichtung beschrieben. Das Verfahren nutzt die Laufzeitunterschiede der von den dreidimensionalen Objekten zurückgestreuten Lichtimpulse bei der bildpunktsynchronen (pixelsynchronen) Detektion am Sensor innerhalb kurzer Integrationszeiten. Dabei wird ein CMOS-Sensor eingesetzt. Dieser Sensor besitzt eine Lichtempfindlichkeit von beispielsweise 1 mLux. Weiterhin weist er eine hohe Intensitätsdynamik von bis zu $10^7$ auf, einen wahlfreien Zugriff auf die einzelnen Bildpunkte (Pixel), sowie eine einstellbare Integrationszeit (Sample & Hold). Für die Messung der Ladungsmenge Q(t) bei Belichtung am einzelnen Bildpunkt.

Gegenüber Verfahren die eine CCD-Kamera einsetzen, lassen sich besondere Vorteile erzielen, wie beispielsweise die parallele Erfassung von Intensitäts- und dreidimensionalen Bildern, sowie die Realisierung kurzer Bildaufnahmezeiten, die deutlich unter den Auslesezeiten von CCD-Kameras liegen. Weiterhin benötigt der CMOS keine aufwendigen mechanischen Shutter und es müssen auch keine leistungsstarken Laserlichtquellen für die Kurzzeitbelichtung eingesetzt werden.

Das Verfahren ist insbesondere für die Erkennung von Personen und Bewegungsabläufen in der Raumüberwachung, beispielsweise Fahrzeuginnen/-außenüberwachung der Automatisierung von Krananlagen sowie der Navigation geeignet.

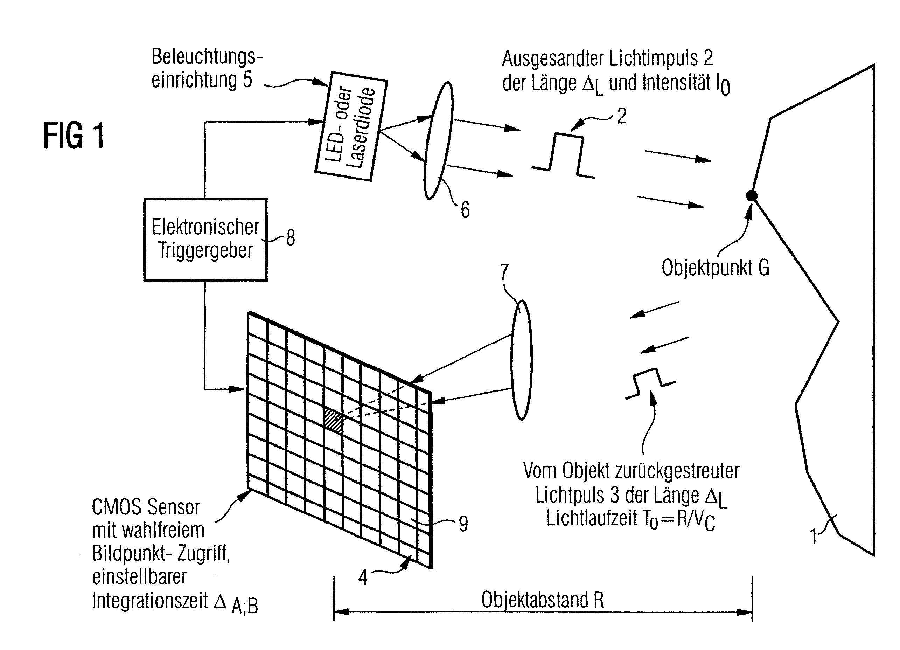

Die wesentlichen Funktionsmerkmale werden anhand von Figur 1 erläutert. Zunächst wird für die Beleuchtung der zu erfassenden räumlichen Objekte mit kurzen Lichtimpulsen beispielsweise <100 ns gesorgt. Die Beleuchtung kann mit Laserlicht, wie beispielsweise mit einer gepulsten Laserdiode oder mit Lichtquellen, wie beispielsweise einer gepulsten LED-Diode erfolgen. Das Verfahren ist unabhängig vom Winkel der Beleuchtung, die nicht unbedingt zentral zur allgemeinen Detektionsrichtung erfolgen muß. So ist beispielsweise auch bei koaxialer Beleuchtung und Detektion der Einsatz eines Ringlichtes denkbar. Die in Figur 1 dargestellte Anordnung dient nur zur schematischen Verdeutlichung des Funktionsprinzips.

Eine erste Bildaufnahme A wird mit einer kurzen Integrationszeit $\Delta_A$ am CMOS-Sensor verbunden. Die von den Objektpunkten G der dreidimensionalen Szene zurückgestreuten Lichtimpulse 3 der Länge $\Delta_L$ (< 100 nsec) werden an den zugehörigen Bildpunkten 9 des CMOS-Sensors innerhalb einer eingestellten kurzen Integrationszeit $\Delta_A \leq \Delta_L$ erfaßt. Durch einen elektronischen Triggerimpuls wird dabei ein fester zeitlicher Bezug zwischen ausgesandtem Lichtimpuls 2 und dem Öffnen des Integrationszeitfensters am CMOS-Sensor hergestellt. Aufgrund der Laufzeit des Lichtes ergibt sich je nach Objektabstand R eine unterschiedliche zeitliche Verschiebung

$$\tau = 2R / V_c \ (V_c = Lichtgeschwindigkeit)$$

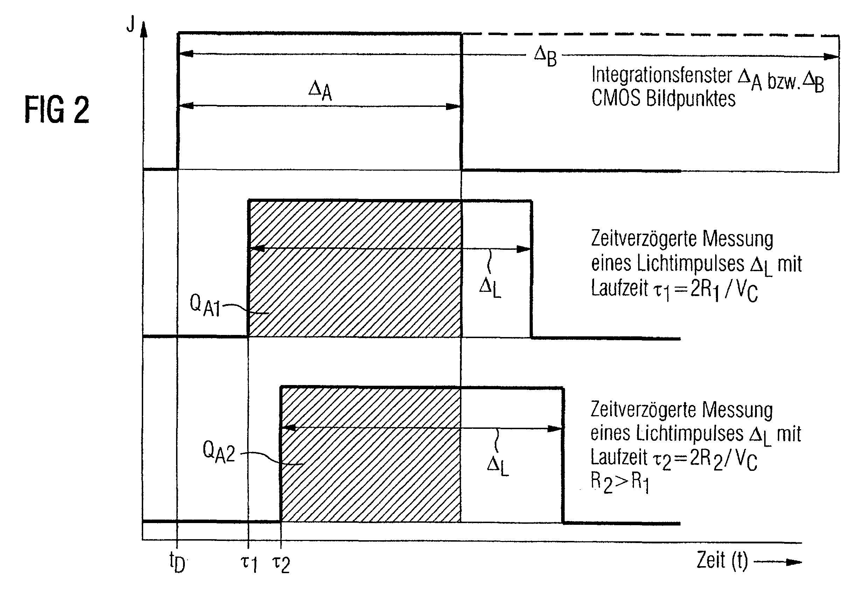

zwischen ausgesandtem und am CMOS-Sensor detektierten Lichtimpuls. Die am Bildpunkt innerhalb der Integrationszeit $\Delta_A$ gemessene Ladung $Q_A$ wird dadurch vom Abstand R zwischen Sensor und Objektpunkt G abhängig. Siehe hierzu Figur 2.

$$Q_A \propto I_0 {}^* O_R(\Delta_L - (2R/V_C - t_D)) \tag{1}$$

$I_0$ Intensität des ausgesandten Lichtimpulses

$O_R$ Oberflächenreflexionskoeffizient am Objektpunkt G

$t_D$ Triggerpunktzeitverzögerung zwischen ausgesandtem Lichtimpuls und Start des Integrationsfensters am CMOS-Sensor

Für Objektpunkte G mit gleichem Oberflächenreflektionskoeffizienten $O_R$ wird abhängig von ihrem Abstand R eine unterschiedliche Ladung $Q_A$ am zugehörigen Bildpunkt des CMOS-Sensors gemessen. Damit werden kleine Laufzeitunterschiede der Lichtimpulse in Ladungsänderungen $Q_A$ transformiert, so daß eine integrierte Ladung für jeweils einen Objektpunkt G mit seinem jeweiligen Abstand $R_{(1,...)}$ stellvertretend ist. Diese können bei einem CMOS-Sensor sehr empfindlich und mit hoher Dynamik detektiert werden. Üblicherweise besitzen die Objekte einer dreidimensionalen Szene eine unterschiedliche Oberflächenreflexion.

Es wird daher zur Normierung des Abstandsbildes noch eine zweite Bildaufnahme $Q_B$ durchgeführt, die nur von der Oberflächereflexion der Objekte der dreidimensionalen Szene abhängig ist.

Die Durchführung einer zweiten Bildaufnahme B mit langer Integrationszeit $\Delta_B$ dient zur Normierung der Oberflächenreflexion der dreidimensionalen Szene, wobei im Prinzip das herkömmliche Intensitäts- oder Grauwertbild verwendet wird. Hierzu wird am CMOS-Sensor bei einer zweiten Bildaufnahme eine Integrationszeit $\Delta_B$ eingestellt, die sehr groß gegenüber der Länge eines Beleuchtungslichtimpulses ist; $\Delta_B \gg \Delta_L$ z.B. 1 Mikrosekunde. Jetzt werden alle zurückgestreuten Lichtimpulse 3 unabhängig von ihrer Laufzeit in vollem Umfang am CMOS-Sensor detektiert. Die an einem Bildpunkt gemessene Ladung $Q_B$ gibt sich zu

$$Q_B \propto I_D \cdot O_R \cdot \Delta_L . \tag{2}$$

Das erhaltene Bild ist nur von der Beleuchtungsintensität $I_0$, dem Oberflächenreflektions-Koeffizienten $O_R$ des zugehörigen Objektpunktes, sowie der Lichtimpulslänge $\Delta_L$ abhängig.

Die Erzeugung des zweidimensionalen Abstandsbildes $Q_R$ geschieht durch die Berechnung aus der Differenz und Normierung von Bildaufnahme A und B bzw. $Q_A$ und $Q_B$

$$Q_R = (Q_A - Q_B) / Q_B \tag{3}$$

Aus Gleichung (1) und (2) folgt mit $t_d = 0$ die Gleichung

$$Q_R \propto -2R/(V_c {}^* \Delta_L) \tag{4}$$

Dieser Wert kann nach Auslesen und Digitalisieren sowie zusätzlicher Skalierung für alle Bildpunkte direkt als Abstandsbild $Q_R$ ausgegeben werden. Ist die Triggerverzögerungszeit $t_d$ ungleich 0, so addiert sich zu allen Punkten des Abstandsbildes $Q_R$ ein konstanter Offset

$$R_D = t_D/(V_c {}^* \Delta_L) \tag{5}$$

$R_D$ = Abstandswert bei $t_D$ (Ladungsoffset)

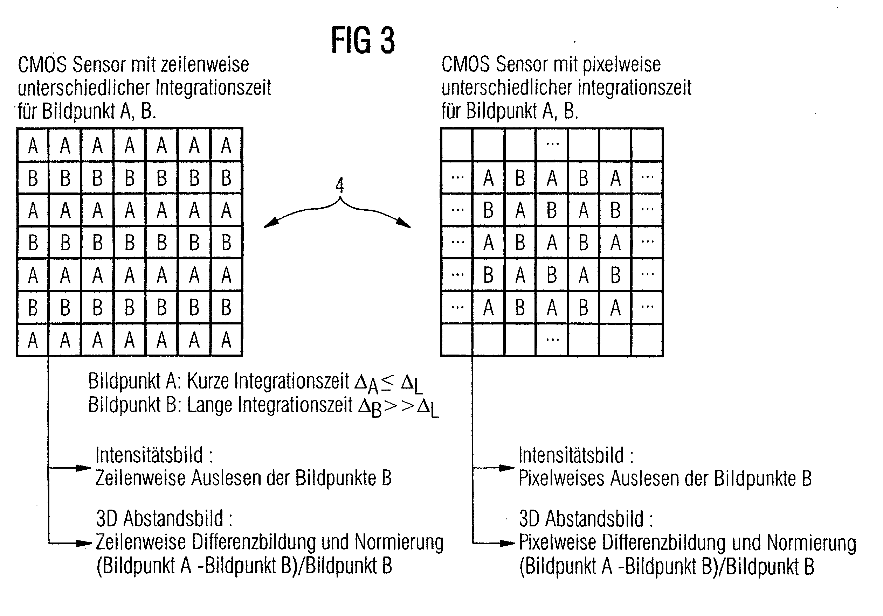

Die gleichzeitige Aufnahme von Intensitäts- und dreidimensinalem Bild bezieht sich auf eine Ausführung einer örtlich und zeitlich parallelen Erfassung von Intensitäts-und Abstandswerten. Hierzu wird eine Chiparchitektur und pixelbezogene Integrationszeit derart gewählt, daß direkt benachbarte Pixel A und Pixel B entsprechend der Figur 3 auf dem CMOS-Sensor die zurückgestreuten Lichtimpulse 3 der dreidimensionalen Szene gleichzeitig mit kurzer Integrationszeit $\Delta_A \leq \Delta_L$ (für Pixel A) aufnehmen und mit langer Integrationszeit $\Delta B \gg \Delta_L$ (für Pixel B) erfassen. Durch eine auf dem Chip integrierte elektronische Schaltung kann dann direkt das zweidimensionale Abstandsbild

$$Q_R = (Q_A - Q_B)/Q_B \qquad (6)$$

der zugeordneten Pixel A und B berechnet und ausgegeben werden.

Figur 3 zeigt dazu schematisch zwei mögliche Anordnungen auf dem CMOS-Sensor für die parallele Erfassung von Intensitäts und dreidimensionalem Abstandsbild. Weitere Varianten hierzu sind möglich. Die gleichzeitige Erfassung von Intensitäts-und dreidimensionalem Abstandsbild ist besonders für die Analyse bewegter dreidimensionaler Szenen von Bedeutung, beispielsweise die Erfassung von Personengestik oder die Objektverfolgung. Weitere besondere Kennzeichen der Erfindung sind:

- Falls erforderlich kann eine zusätzliche Normierung des dreidimensionalen Abstandsbildes bezüglich Umgebungslicht durchgeführt werden. Hierzu wird zunächst ohne Beleuchtung der dreidimensionalen Szene bzw. des Objekts die Ladung eines Bildpunktes mit kurzer und langer Integrationszeit erfaßt und von den mit Beleuchtung gemessenen Ladungen $Q_A$ und $Q_B$ abgezogen. Anschließend erfolgt die Berechnung des Abstandsbildes $Q_R$.
- Durch zeitliche Mittelung der Signale mehrerer Lichtimpulse kann eine Erhöhung der Empfindlichkeit des Verfahrens gegenüber dem Rauschen bei geringen zurückgestreuten Lichtintensitäten erreicht werden.
- Die Meßunsicherheit für die Abstandsbestimmung hängt vom Signal/Rauschverhalten des CMOS-Sensors ab. Erwartet wird das Laufzeitunterschiede zwischen 0,1 ns noch detektiert werden können. Daraus folgt eine Meßunsicherheit von weniger als 3 cm für die Abstandsbestimmung.

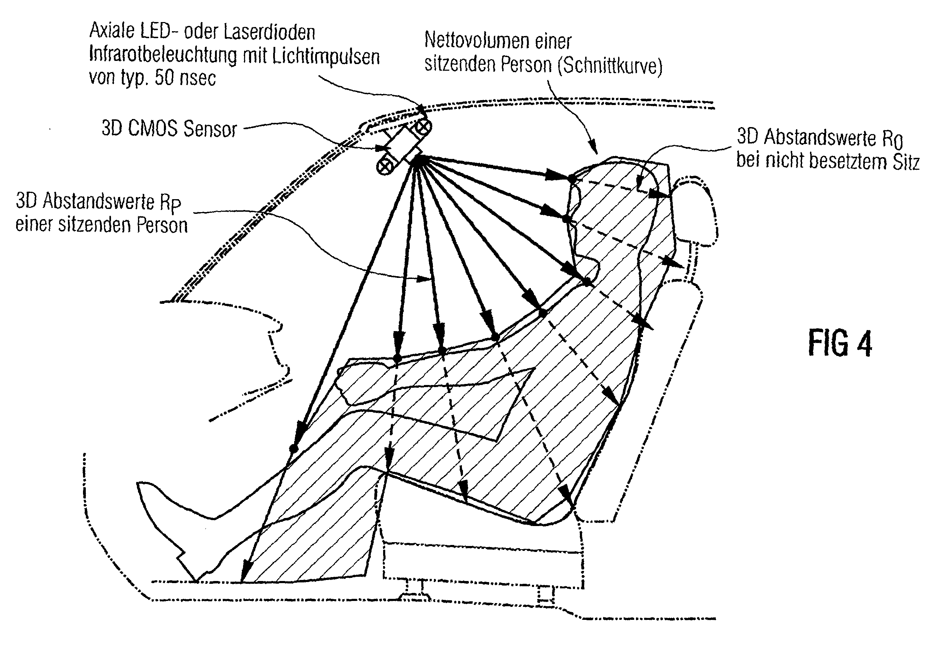

Die wesentlichen Verwendungen des beschriebenen Verfahrens und der beschriebenen Vorrichtung betreffen die Überwachung von Innenräumen, insbesondere in Fahrzeugen in Verbindung mit volumetrischen Auswerteverfahren. Die Aufgabe der optischen Innenraummüberwachung bei Fahrzeugen ist die Erkennung der Sitzbelegung, wie beispielsweise Personen, Kindersitz, sonstige Objekte, die Erfassung der Sitzposition von Personen sowie der Diebstahlschutz, d.h. das unzulässige Eindringen in das Fahrzeuginnere von außen. Die Erkennung von Personen und ihrer Sitzposition ist für die stufenweise Auslösung eines Airbaigs (smart Airbaig) von hoher sicherheitsrelevanter Bedeutung und muß im Kollisionsfall sehr zuverlässig und in kurzen Meßzeiten erfolgen. Die Erfindung erfüllt diese Anforderungen durch eine schnelle und zuverlässige Erzeugung eines dreidimensionalen Abstandsbildes $Q_R$ im Fahrzeuginneren, wobei volumentrische Auswerteverfahren eingesetzt werden. Dabei werden aus den Abstandswerten R in einem Raumwinkelelement $\Omega$ die von Objekten 1 besetzten Nettovolumenanteile im Fahrzeuginnenraum als Differenz zu den Abstandswerten bei unbesetztem Fahrzeuginneren bestimmmt (siehe hierzu Fig. 4).

Das Verfahren und die Vorrichtung liefern weitere wesentliche Vorteile, wie:

- Schnelle, globale Erfassung der aktuellen Sitzbelegung durch Differenzbildung eines dreidimensionalen Abstandsbildes vom Fahrzeuginneren ohne Objekte (dreidimensionales Referenzbild $Q_{RO}$) und dem aktuell auszuwertenden dreidimensionalen Abstandsbild mit einer Person oder einem sonstigen Objekt $Q_{RP}$ auf einem Sitz. Dabei gilt für das Nettovolumen $V_p$ der Sitzbelegung:

$$V_P = \int_\Omega R_0(\Omega) * dF - \int_\Omega R_P(\Omega) * dF \qquad (7),$$

wobei $R_0$ die Abstandswerte ohne Person bzw. sonstigem Objekt und $R_p$ die Abstandswerte mit Person bzw. sonstigem Objekt auf dem Sitz sind und dF eine differenzielle Fläche bezeichnet.

- Die adaptive Ermittlung der Sitzbelegung aus der Berechnung der relativen Abstandsänderungen vor und nach dem Einsteigen einer Person ins Fahrzeug kann durchgeführt werden. Durch Anwendung regressiver und stochiastischer Auswerteverfahren kann die Zuverlässigkeit der Differenzbestimmung noch weitergesteigert werden.
- Die Größenbestimmung der erfaßten Objekte und globale Unterscheidung von Objekten über Volumen- Vergleichsklassen ist möglich.
- Räumliche Zuordnung von besetzten Volumenanteilen ist möglich .
- Bestimmung der räumlichen Extrempositionen (x,y,z) des besetzten Volumens im Innenraum für die Steuerung der Airbaig Auslösung kann bestimmt werden.

- Volumetrische Verfolgung von Bewegungsabläufen im Raum bei zeitlich aufeinanderfolgenden Bildaufnahmen und Differenzbildung. Erkennuung von Personen und Gestik aus der Bewegungsanalyse.

Diese integrale Volumenbetrachtung ermöglicht eine globale Erfassung von Objekten und Positionen im Raum und ist nicht auf die Bestimmung von Merkmalen, wie beispielsweise Konturen, Ecken, Kanten im Bild zur Objekterkennung angewiesen. Die Auswertezeiten können für die dreidimensionale Bildaufnahme und volumetrische Auswertung unter 10 ms liegen.

Als Anwendungsgebiet des beschriebenen Verfahrens und der Vorrichtung kommt insbesondere ein Fahrzeuginnenraum infrage. Dabei wird für die dreidimensionale Bildaufnahme mit LED-Lichtimpulsen von beispielsweise 50 ns (Nanosekunden) ein Objekt belichtet. Die Integrationszeiten am CMOS-Sensor werden für die Bildaufnahme $Q_A$ zu 50 ns und für die Bildaufnahme $Q_B$ zu 0,5 µs, gewählt. Die zu erfassende Szenendynamik im Fahrzeuginneren soll 200 : 1 betragen. Die Abstandswerte R sollen mit einer Meßunsicherheit <15cm (entsprechender Laufzeitunterschied eines Lichtimpulses = 1 ns) in einem Meßbereich bis 1,5 m (Laufzeit 10 ns) erfaßt werden.

Mit diesen Anforderungen wird am CMOS Sensor eine Intensitätsdynamik von (10 x 200 =) 2000 : 1 erforderlich. Die digitale Erfassung des dreidimensionalen Abstandsbildes $Q_R$ wird damit durch einen 12 Bit A/D Wandler gewährleistet. Für eine Sensorortsauflösung von 50 x 50 Bildpunkten werden für die Bildaufnahmen A mit kurzer Integrationszeit und B mit langer Integrationszeit maximal $10^4$ Ausleseoperationen notwendig, die bei Auslesefrequenzen, von beispielsweise 2 MHz zu einer gesamten Bildaufnahmezeit für das dreidimensionale Abstandsbild von maximal 5 ms führen. Die Berechnung der Differenzvolumina aus den 2500 Abstandswerten ist mit einem schnellen Prozessor, wie beispielsweise einem Pentium mit 200 Mhz in weiteren 5 ms ohne Schwierigkeit ausführbar.

In Figur 4 wird ein Schema für eine Anwendung der Erfindung in Fahrzeuginnenräumen dargestellt. Die Pfeile mit gepunkteten Linien sind stellvertretend für einen nichtbelegten Sitz und die mit durchgezogenen Linien für einen mit einer Person belegten Sitz. Für die globale Objekterkennung und Positionsbestimmung wird der umhüllende Nettovolumenanteil aus den dreidimensionalen Abstandsdaten bei besetztem und bei unbesetztem Fahrzeug bestimmt. Das Nettovolumen $V_p$ einer Person oder eines sonstigen Objektes auf einem Autositz berechnet sich nach Gleichung (7).

Das bisher beschriebene Verfahren zur Aufnahme eines Abstandsbildes beruht auf einem Differenzverfahren, wobei die Laufzeit $T_0 = U_p / U_{ges}*\Delta_A$ beträgt, wobei:

$T_0$ = Lichtlaufzeit, $\Delta_A$ = Integrationszeit,
$U_{ges}$ = Meßsignal bei $\Delta_B$ minus Dunkelstromanteil bei $\Delta_B$,
$U_p$ = $U_{ges}$ minus (Meßsignalanteil bei $\Delta_A$ minus Dunkelstromanteil bei $\Delta_A$).

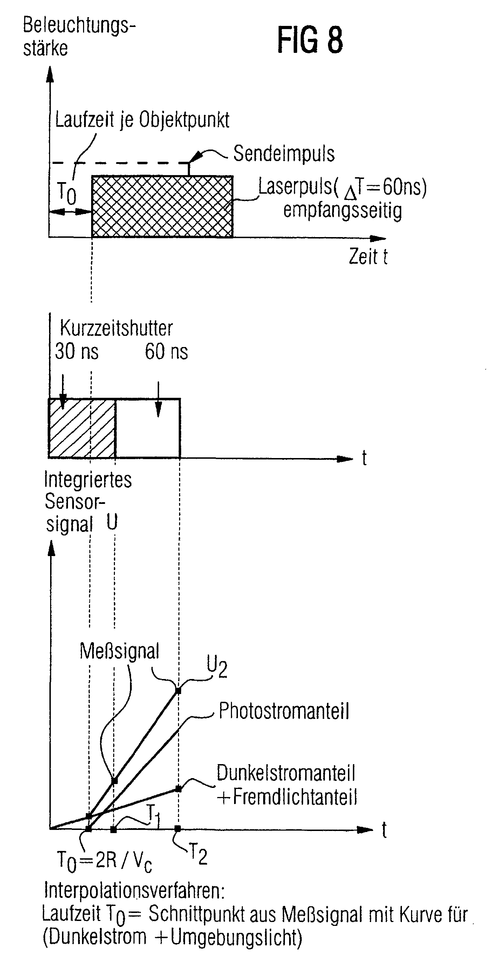

Die weitere hauptsächliche Lösung der Erfindung, die in Figur 8 dargestellt wird, wertet die aufgenommenen Meßsignale am Sensor mittels eines Interpolationsverfahrens aus. Dabei ergibt sich die Laufzeit des Lichtes von der Lichtquelle über das Objekt bis zum Sensor durch den Schnittpunkt der Kurve des Meßsignales in Figur 8, geschnitten mit der Kurve des Dunkelstromanteiles. Für die Lichtlaufzeit gilt

$$T_0 = 2R / V_c ,$$

woraus sich der Abstandswert R ergibt.

Die bei zahlreichen industriellen Anwendungen der Bildverarbeitung notwendige dreidimensionale Bilddatenerfassung ist insbesondere für die automatische Überwachung von Räumen, beispielsweise Autoinnenraum, notwendig. An die Genauigkeit des Entfernungsbildes/Abstandsbildes werden nicht allzu hohe Anforderungen gestellt. Entfernungsbilder mit etwa 1000 Bildpunkten wären für eine Raumüberwachung in den meisten Fällen schon ausreichend. Übliche Triangulationsverfahren scheiden dabei aus Kostengründen, sowie wegen der großen notwendigen Meßbasis, aus.

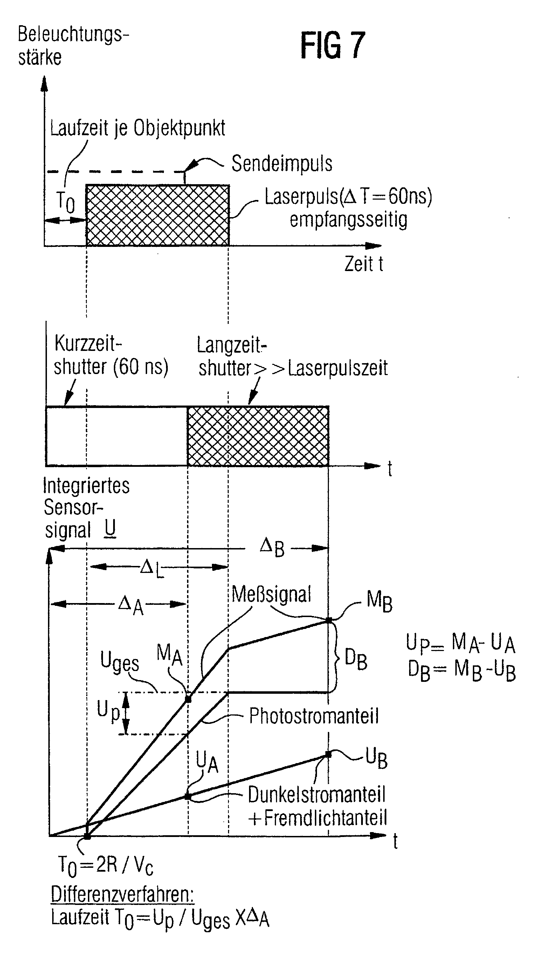

Sowohl die Beleuchtungsart entsprechend Figur 7, als auch die Beleuchtungsart entsprechend Figur 8 lassen eine schnelle und kostengünstige Aufnahme eines dreidimensionalen Abstandsbildes verwirklichen. Das Verfahren, bei dem über die Interpolation die Laufzeit des Lichtes, die zur Auswertung notwendig ist, für jeden Bildelementpunkt des Sensors 4 erzielt wird, ist beispielhaft in Figur 8 dargestellt. Hierin wird anstatt eines Lichtimpulses mit definierter Länge nur ein Lichtintensitätsanstieg mit steiler Flanke ausgewertet. Der am Sensor empfangene vom Objekt reflektierte Laserpuls wird durch zwei unterschiedliche Integrationszeiten abgeschnitten. Dadurch wird zum einen das Meßsignal unabhängig vom Verlauf der abfallenden Flanke des Lichtimpulses und zum anderen kann der Einfluß des Dunkelstromes, der beispielsweise durch die Betriebswärme eines Sensors entsteht, und des Umgebungslichtes exakt für jeden Bildpunkt kompensiert werden.

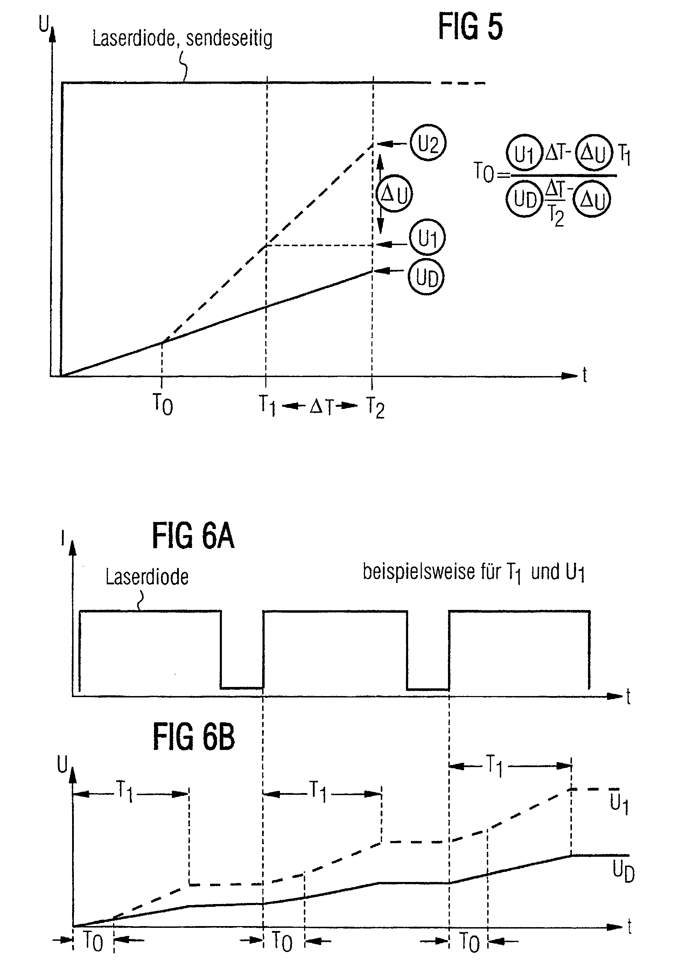

Figur 5 zeigt die Entfernungsmessung mit integrierendem CMOS-Bildsensor. In dem Zeit t/Sensorspannung U-Diagramm ist zum einen die sendeseitig beleuchtende Laserdiode bzw. deren rechteckförmig ausgebildeter Lichtimpuls dargestellt. Darunter sind die empfangsseitig aufgenommenen Meßsignale dargestellt. Die durchgezogene Linie, die vom Ursprung des Koordinatensystems zu der Spannung $U_d$ führt, ist die erste durchgeführte Messung und beinhaltet einen Dunkelstromanteil plus einen Fremdlichtanteil. $U_d$ wird zur Integrationszeit $T_2$, die größer als eine andere Integrationszeit $T_1$ ist, aufgenommen. Im Anschluß daran wird das Objekt 1 mit der Laserdiode beleuchtet, woraufhin zunächst in den einzelnen Bildpunkten nur die Dunkelströme verbunden mit dem Fremdlichtanteil integriert werden. Wenn aufgrund der Lichtlaufzeit $T_0$ zusätzliches Licht vom Objektpunkt G zurückgestreut wird, so steigt das Meßsignal vom Zeitpunkt $T_0$ entsprechend der Helligkeit des jeweiligen Bildpunktes stärker an. Nach einer bestimmten Integrationszeit $T_1$ wird dann die Spannung $U_1$ für alle Bildpunkte ausgelesen und abgespeichert. Der gleiche Vorgang wiederholt sich nun mit der bereits aus der ersten Dunkelstrommessung bekannten Integrationszeit $T_2$. $T_1$ beträgt beispielsweise 30 ns und $T_2$ beträgt beispielsweise 60 ns. An den Stellen, an denen das Meßsignal die Zeiten $T_1$ bzw. $T_2$ schneidet, was gleichbedeutend ist mit einem Abschneiden des empfangenen Lichtimpulses, ergibt sich der Punkt $U_1$ bzw. der Punkt $U_2$. Es gilt die Beziehung $\Delta U = U_2 - U_1$. Die Lichtlaufzeit $T_0$ errechnet sich nach der Formel die in Figur 5 dargestellt ist. Verlängert man eine Gerade durch die Punkte $U_2$ und $U_1$, so schneidet diese Gerade nach unten hin die Dunkelstrom darstellende Gerade zwischen dem Ursprung des Koordinatensystems und der Spannung $U_D$. Am Schnittpunkt kann die Lichtlaufzeit $T_0$ abgelesen werden. Sämtliche Werte für $U_1$ und $U_2$ bzw. $\Delta U$ werden ebenfalls für alle Bildpunkte ausgelesen und gespeichert. Aus den für jeden Bildpunkt abgespeicherten Spannungen $U_D$, $U_1$, $U_2$ und $\Delta U$ in Verbindung mit den vorgegebenen Integrationszeiten $T_1$ und $T_2$ läßt sich eindeutig und exakt für jeden Bildpunkt die Laufzeit $T_0$ berechnen, auch wenn relativ hohe Dunkelstromanteile $U_D$ vorliegen. Dabei gilt:

$$T_0 = U_1 \cdot \Delta T - \Delta U \cdot T_1 / (U_D \cdot \Delta T / T2 - \Delta U).$$

Dies eröffnet die Verwendung von geringeren Lichtleistungen bei gleichzeitig genauer Messung der Laufzeit und damit der Entfernung zum Objekt.

Eine vorteilhafte Ausgestaltung sieht vor, daß zur Verringerung der aus Kostengründen meist kritischen Laserleistung eine mehrfache Wiederholung des oben beschriebenen Vorgangs in hintereinander geschieht, wobei sich die ergebenden Werte für $U_1$, $U_D$, und $\Delta U$ erst am Ende der Mehrfachbelichtung von CMOS-Sensoren auslesen lassen und digitalisiert werden. Siehe hierzu die Figuren 6a und 6b. Eine analoge Mittelwertbildung für die Mehrfachbelichtung auf dem CMOS-Sensor vermeidet auch die relativ langen Auslesezeiten bei einer späteren digitalen Mittelung. Eine adaptive Einstellung auf diejeweilige Reflektivität des Objektes im Hinblick auf die Optimierung des Signal-/Rauschverhältnisses der Meßwerte wird, dadurch erzielt, daß in wenigen Testbildern die Zahl der Belichtungen solange gesteigert wird, bis sich in einer gewissen Menge von Bildpunkten des Gesamtbildes eine Sättigung der Werte n($U_1 + \Delta U$) einstellt; mit n = Anzahl der Mehrfachbelichtungen.

Durch die beschriebenen Schritte wird ermöglicht, daß eine exakte Berechnung von der Lichtlaufzeit $T_0$ bei vorliegendem Dunkelstrom und Umgebungslicht möglich ist, daß das Auslesen des Signales vom CMOS-Sensor erst nach der Mehrfachbelichtung geschieht, woraufhin sich die Digitalisierung anschließt und daß eine adaptive Einstellung der Mehrfachbelichtung entspre chend der Objektreflektivität vorgenommen werden kann. Durch diese Maßnahmen kann eine bisher notwendige Laserleistung um den Faktor 10 bis 20 gesenkt werden bzw. die Genauigkeit er höht werden.

Das in dem Bildsensor verwendete Sensorprinzip ist ein inte grierendes Verfahren, beispielsweise auf der Basis einer $n^+ \cdot p$ - Photodiode. Diese Photodiode ist Bestandteil eines elektronischen Kurzzeitintegrators, der weiterhin einen Kon densator und mehrere Transistoren aufweist. Die Verschaltung geschieht derart, daß sich beispielsweise die Kapazität des Kondensators in Abhängigkeit von dem auf die Photodiode ein fallenden Licht entlädt. Dies wird über einen sog. Shutter-Transistor gesteuert. Im Anschluß daran wird beispielsweise das in dem Kondensator verbleibende Potential ausgelesen. Um eine synchronisierte Beleuchtung zu gewährleisten wird die Zeitsteuerung des elektronischen Kurzzeitintegrators ein sog. Strobe-Signal zur Ansteuerung einer Lichtquelle erzeugen. Für jedes Bildpunktelement des Sensors 4 wird ein derartiger elektronischer Kurzzeitintegrator (elektronischer Shutter) verwendet. Anstelle der am Ende einer Messung im Kondensator verbleibenden Potential kann auch das bereits abgeführte Potential als Meßwert herangezogen werden.

In Figur 6a sind mehrere hintereinander geschaltete sendeseitige Laserimpulse dargestellt. In Figur 6b wird beispielhaft die Integrationszeit $T_1$ in Verbindung mit der jeweiligen Spannung $U_1$ und dem Dunkelstromanteil $U_D$ dargestellt. Gleiches kann für $T_2$, $U_2$ und $U_D$ aufgetragen werden. Es ergibt sich für jede Belichtung bzw. Mehrfachbelichtung ein Wert für die Lichtlaufzeit $T_0$.

In der Gegenüberstellung der Figuren 7 und 8 ist zu erkennen, daß das Interpolationsverfahren entsprechend Figur 8 kürzere Beleuchtungszeiten aufweist. Die jeweils in der Mitte dargestellten Shutter-Zeiten von beispielsweise 30ns und 60 ns in Figur 8 und 60 ns in Verbindung mit einer sehr langen Laserimpulszeit in Figur 7 sollen die Integrationszeiten am Sensor festlegen. In der Figur 7 ist im oberen Teil das zeitliche Verhältnis zwischen der sendeseitigen Beleuchtung und dem empfangsseitigen Eintreffen des Laserimpulses dargestellt. Die in den Figuren 5 bis 8 jeweils dargestellten Ausführungsbeispiele weisen keine Triggerverzögerungszeit auf. Dies bedeutet, daß empfangsseitig mit dem Beginn des Sensorimpulses das Meßfenster geöffnet wird. Dies bedeutet für die Darstellung in Figur 7, daß der Kurzzeit-Shutter (60ns) den empfangenen Laserpuls, jeweils bezogen auf einen Objekt- bzw. Bildelementpunkt, bei der Zeit $\Delta_A$ abschneidet. Die Zeitdauer des Lichtimpulses ist sende- wie empfangsseitig $\Delta_L$. Es wird deutlich, das auf Grund von verschiedenen Lichtlaufzeiten der elektronische Kurzzeitintegrator am Sensor jeweils ein Potential als Meßwert liefern wird, daß in Abhängigkeit von der Laufzeit ab dem Zeitpunkt $T_0$ bis zum Ende von und $\Delta_A$ aufintegriert wird. Die Integrationszeit $\Delta_B$ wird im Falle der Figur 7 zum Ausgleich von Reflektivitätsunterschieden am Objekt 1 verwendet. Dabei wird ein Dunkelstrom und Fremdlichtanteil ermittelt, der entsprechend vom Meßsignal abgezogen werden kann.

Die Figur 8 zeigt eine der Figur 7 entsprechende Darstellung, wobei der obere Teil identisch dem der Figur 7 ist. In der Mitte der Figur 8 werden zwei Kurzzeit-Shutterzeiten dargestellt. Diese werden in ähnlicher Weise wie in Figur 7 zum Abschneiden der am Sensor 4 eintreffenden Laserimpulse verwendet. Somit ergeben sich eine kürzere Integrationszeit $T_1$ und eine längere Integrationszeit $T_2$. Das Meßsignal weist in den Figuren 7 und 8 einen Dunkelstrom und Fremdlichtanteil auf. Das Meßsignal ergibt sich somit aus der Addition des Photostromanteils zu dem Dunkelstrom und Fremdlichtanteil. Anders ausgedrückt kann der Photostromanteil ermittelt werden, indem vom Meßsignal der Dunkelstrom und Fremdlichtanteil angezogen wird. Die Lichtlaufzeit $T_0$ ergibt sich an der Stelle auf der Zeitachse an der das Meßsignal bei einem eingehenden reflektierten Lichtimpuls von dem normalen Verlauf des Dunkelstrom- und Fremdlichtanteils abweist, weil der Photostromanteil nicht mehr Null ist. Die Auswertung, die die Lichtlaufzeit $T_0$ ergibt, ist in Zusammenhang mit Figur 5 beschrieben worden.

Zur deutlichen Reduzierung der Laserleistung ist vorgesehen, daß ein Meßobjekt seriell partiell beleuchtet wird. Beleuchtung und Auswertung geschehen gleichzeitig. Somit wird ein Objekt 1 partiell seriell beleuchtet und jeweils ausgewertet, wobei jeweils einer von mehreren Lichtquellen 10 ein bestimmter Teil des Objektes 1 zugeordnet ist. Darüberhinaus kann die Anstiegszeit der Intensität einer Lichtquelle 10, beispielsweise eines Lasers, deutlich verkürzt werden, wie etwa auf 0,1 ns.

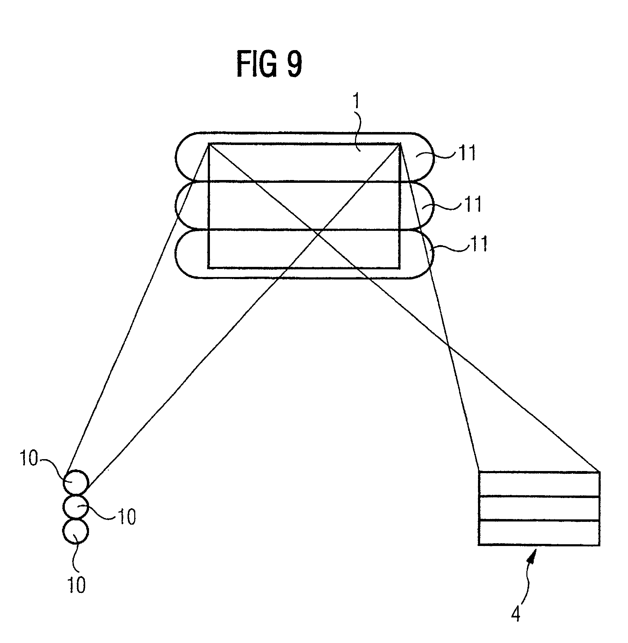

Figur 9 zeigt schematisch eine Anordnung von drei Lichtquellen 10, die ein Objekt 1 jeweils in einem vorbestimmten Bereich 11 beleuchten. Der Sensor 4 empfängt die den partiellen Bereichen 11 auf dem Objekt 1 entsprechenden reflektierten Lichtanteile und verarbeitet sie weiter. Diese Ausgestaltung ermöglicht die Begrenzung beispielsweise der Laserleistung einer Beleuchtungseinheit mit einem Laser. Die serielle Beleuchtung und Detektion ist kostengünstig realisierbar und durch bestimmte Normen vorgegebene maximale Laserleistungen werden problemlos unterschritten. Außerdem läßt sich begleitend dazu die Anstiegszeit der Laserintensität deutlich, beispielsweise auf 0,1 nsec, verkürzen.

## Patentansprüche

1. Verfahren zur Aufnahme eines dreidimensionalen Abstandsbildes von räumlichen Objekten unter Einsatz eines bildpunktauflösenden optoelektronischen Sensors (4) mit an jedem Bildpunktelement (9) vorhandenen elektronischen Kurzzeitintegrator, wobei eine Integrationszeit einstellbar ist, bestehend aus folgenden Schritten:

   - das Objekt (1) wird mit mindestens einem Lichtimpuls (2) vorgegebener Zeitdauer $\Delta_L$ beleuchtet,
   - von Objektpunkten (G) zurückgestreute Lichtimpulse (3) werden an zugehörigen Bildpunkten des Sensors(4) innerhalb einer vorgegebenen kurzen Integrationszeit $\Delta_A$, mit $\Delta_A \leq \Delta_L$, erfaßt, wobei der Zeitpunkt für den Beginn der Integrationszeit $\Delta_A$ vor dem Eintreffen des ersten zurückgestreuten Lichtimpulses (3) liegt, der dem nächstliegenden Objektpunkt (G) entspricht,
   - aus den entsprechend ihrer unterschiedlichen Laufzeiten resultierenden unterschiedlichen aufgenommenen Intensitäten der zurückgestreuten Lichtimpulse (3) werden Abstandswerte ermittelt.

2. Verfahren zur Aufnahme eines dreidimensionalen Abstandsbildes von räumlichen Objekten unter Einsatz eines bildpunktauflösenden optoelektronischen Sensors (4) mit an jedem Bildpunktelement (9) vorhandenem elektronischen Kurzzeitintegrator, wobei eine Integrationszeit einstellbar ist, bestehend aus folgenden Schritten:

   - Aufnahme und Integration des einen Dunkelstrom und Umgebungslicht darstellenden Sensorsignales von dem Beginn der Aufnahme und Integration bis zu einer vorgegebenen Integrationszeit $T_2$,
   - Beginn der Belichtung eines Objektes (1) durch eine Beleuchtungseinrichtung (5) zeitgleich mit dem Beginn der Aufnahme und der Integration des Sensorsignales am Sensor (4), wobei innerhalb eines Lichtintensitätsanstieges des am Sensor (4) empfangenen Lichtes bis zu einer Integrationszeit $T_1$ integriert wird und $T_1$ kleiner ist als $T_2$,

- wiederholte Belichtung des Objektes (1) durch die Beleuchtungseinrichtung (5) mit zeitgleichem Beginn der Aufnahme und der Integration des Sensorsignales am Sensor (4); wobei innerhalb des Lichtintensitätsanstieges des am Sensor (4) empfangenen Lichtes bis zu der Integrationszeit $T_2$ integriert wird,
- zu den Zeitpunkten $T_1$ und $T_2$ wird für alle Bildpunkte der jeweils integrierte Wert des Sensorsignales ausgelesen und gespeichert und
- aus den gespeicherten Werten werden für jeden Bildpunkt die Laufzeit $T_0$ des Lichtes von der Beleuchtungseinrichtung (5) über das Objekt (1) bis zum Sensor (4), sowie ein entsprechender Abstandswert, berechnet.

3. Verfahren nach Anspruch 1 oder 2, worin die einzelnen Verfahrensschritte zur Gewinnung eines Sensorsignales jeweils mehrfach wiederholt werden, und die daraus resultierenden Signale für jeden einzelnen Bildpunkt integriert werden und sich erst in Anschluß an die Mehrfachbelichtung das Auslesen, Abspeichern und Auswerten der Sensorsignale anschließt.

4. Verfahren nach einem der vorhergehenden Ansprüche, worin abgespeicherte Werte digitalisiert werden.

5. Verfahren nach einem der Ansprüche 3 oder 4, worin eine adaptive Einstellung auf die jeweilige Reflektivität eines Objektes (1) dadurch geschieht, daß die Zahl der Mehrfachbelichtungen solange gesteigert wird, bis in einer vorgegebenen Menge von Bildpunkten des Gesamtbildes die integrierten Intensitätswerte bei $T_1$ und bei $T_2$ in die Nähe einer Sättigung kommen.

6. Verfahren nach Anspruch 5, worin die Zahl der Mehrfachbelichtungen oder die Intensität der Laserstrahlung solange gesteigert wird, bis für jeden einzelnen Bildpunkt des Gesamtbildes bei $T_1$ und bei $T_2$ die einzelnen integrierten Intensitätswerte in die Nähe einer Sättigung kommen.

7. Verfahren nach Anspruch 5 oder 6, worin das integrierte Sensorsignal im wahlfreien Bildpunktzugriff für jeden einzelnen Bildpunkt oder für ein Segment von Bildpunkten ausgelesen wird, wobei ein Segment eine Zeile des optoelektronischen Bildsensors sein kann.

8. Verfahren nach einem der vorhergehenden Ansprüche, wobei ein räumliches Objekt (1) mittels mehrerer partiell das Objekt beleuchtender Lichtquellen (10) beleuchtet wird, diese Lichtquellen (10) seriell aktiviert werden und die Auswertung entsprechend bei der jeweiligen Beleuchtung geschieht.

9. Verfahren nach einem der vorhergehenden Ansprüche, worin die Integrationszeit bildpunktweise einstellbar ist.

10. Verfahren nach einem der Ansprüche 1 oder 3 bis 9, worin zur gleichzeitigen oder nachfolgenden Normierung der Oberflächenreflexion des Objektes (1) zusätzlich sämtliche zurückgestreuten Lichtimpulse (3) mit einer langen Integrationszeit $\Delta_B \gg \Delta_L$ vollständig erfaßt werden.

11. Verfahren nach einem der Ansprüche 1 oder 3 bis 10, worin der Beginn einer Integrationszeit $\Delta_A;\Delta_B$ mit einer Triggerimpulsverzögerung gegenüber dem Sendeimpuls verbunden ist.

12. Verfahren nach einem der Ansprüche 1 oder 3 bis 11, worin eine Integrationszeit $\Delta_A$ weniger als 100 ns beträgt.

13. Verfahren nach einem der Ansprüche 1 oder 3 bis 12, worin eine Integrationszeit $\Delta_B$ ca. 1μs beträgt.

14. Verfahren nach einem der vorhergehenden Ansprüche, worin eine Lichtimpulslänge weniger, als 100 ns beträgt.

15. Verfahren nach einem der vorhergehenden Ansprüche, worin zur gleichzeitigen Aufnahme eines dreidimensionalen Bildes und eines Grauwertbildes auf dem Sensor (4) zeilenweise unterschiedliche Integrationszeiten $\Delta_A$ bzw. $\Delta_B$ oder $T_1$ bzw. $T_2$ eingestellt werden.

16. Verfahren nach einem der vorhergehenden Ansprüche, worin zur gleichzeitigen Aufnahme eines dreidimensionalen und eines Grauwertbildes auf dem Sensor (4) bildpunktweise unterschiedliche Integrationszeiten $\Delta_A$ bzw. $\Delta_B$ oder $T_1$ bzw. $T_2$ abwechselnd eingestellt werden.

17. Verfahren nach einem der vorhergehenden Ansprüche, worin das Objekt (1) mit Lichtimpulsen eines Lasers oder einer gepulsten Leuchtdiode beleuchtet wird.

**18.** Verfahren nach einem der vorhergehenden Ansprüche, worin der Sensor (4) wahlfrei auslesbar ist.

**19.** Verfahren nach einem der vorhergehenden Ansprüche, worin der Sensor (4) ein CMOS Sensor ist.

**20.** Verfahren nach einem der vorhergehenden Ansprüche, worin die Entfernung vom Sensor (4) zu mindestens einem Punkt als Referenzabstand bekannt ist.

**21.** Verfahren nach Anspruch 20, worin beim Einsatz in einem Fahrzeug ein Referenzpunkt am Türrahmen positioniert ist.

**22.** Verfahren nach einem der vorhergehenden Ansprüche, worin eine Erkennung von statischen Objekten und/oder von Bewegungsabläufen vorgenommen wird.

**23.** Verfahren nach Anspruch 22, worin Objekte überwacht werden, wie Gegenstände oder Personen in Räumen oder in Fahrzeuge.

**24.** Verfahren nach Anspruch 22, worin Fahrzeuge oder Krananlagen überwacht werden und/oder worin eine allgemeine Positionsbestimmung in einem Navigationssystem vorgenommen wird.

**25.** Verfahren nach Anspruch 22 oder 23, worin eine Sitzbelegung und/oder eine Sitzposition beispielsweise einer Person in einem Fahrzeug erkannt wird.

**26.** Vorrichtung zur Aufnahme eines dreidimensionalen Abstandbildes, bestehend aus:

- einer Beleuchtungseinrichtung (5), die Lichtimpulse (2) über eine Optik (6) auf ein Objekt (1) sendet,
- einem optoelektronischen Sensor (4) mit einer vorgeschalteten Optik (7), der die vom Objekt (1) zurückgestreuten Lichtimpulse (3) detektiert, wobei der Sensor (4) durch eine Vielzahl von Bilpunktelementen (9) bildpunktauflösend aufgebaut und wahlfrei auslesbar ist und eine Integrationszeit bildpunktweise einstellbar ist,
- einer Triggereinrichtung (8) zur zeitlichen Abstimmung zwischen Beleuchtungseinrichtung (5) und Sensor (4),
- einer Recheneinheit zur Berechnung eines dreidimensionalen Bildes aus entsprechenden Ladungen der Bildpunktelemente (9) des Sensors (4).

**27.** Vorrichtung nach Anspruch 26, worin an den Bildpunktelementen (9) des Sensors (4) zeilen- oder spaltenweise abwechselnd eine kurze Integrationszeit $\Delta_A$ bzw. $T_1$ und eine lange Integrationszeit $\Delta_B$ bzw. $T_2$ eingestellt ist.

**28.** Vorrichtung nach Anspruch 26, worin an den Bildpunktelementen (9) des Sensors (4) abwechselnd kurze und lange Integrationszeiten $\Delta_A$ bzw. $\Delta_B$ oder $T_1$ bzw. $T_2$ eingestellt sind.

**29.** Vorrichtung nach einem der Ansprüche 26 bis 28, worin die Recheneinheit auf dem Sensor (4) angeordnet ist.


**Claims**

**1.** Method for recording a three-dimensional distance image of spatial objects using a pixel-resolving optoelectronic sensor (4) with an electronic short-time integrator present at each pixel element (9), it being possible to set an integration time, comprising the following steps:

- the object (1) is illuminated with at least one light pulse (2) of predetermined time duration $\Delta_L$,
- light pulses (3) backscattered from object points (G) are detected at associated pixels of the sensor (4) within a predetermined short integration time $\Delta_A$, where $\Delta_A \leq \Delta_L$, the instant for the beginning of the integration time $\Delta_A$ preceding the arrival of the first backscattered light pulse (3), which corresponds to the nearest object point (G),
- distance values are determined from the different recorded intensities of the backscattered light pulses (3), the said intensities resulting in accordance with their different propagation times.

**2.** Method for recording a three-dimensional distance image of spatial objects using a pixel-resolving optoelectronic sensor (4) with an electronic short-time integrator present at each pixel element (9), it being possible to set an integration time, comprising the following steps:

- recording and integration of the sensor signal representing a dark current and ambient light from the beginning of the recording and integration up to a predetermined integration time $T_2$,
- beginning of the exposure of an object (1) by an illumination device (5) at the same time as the beginning of the recording and the integration of the sensor signal at the sensor (4), integration being effected within a light intensity rise in the light received at the sensor (4) up to an integration time $T_1$ and $T_1$ being less than $T_2$,
- repeated exposure of the object (1) by the illumination device (5) with contemporaneous beginning of the recording and the integration of the sensor signal at the sensor (4), integration being effected within the light intensity rise in the light received at the sensor (4) up to the integration time $T_2$,
- at the instants $T_1$ and $T_2$, the respective integrated value of the sensor signal is read out and stored for all the pixels, and
- from the stored values, the propagation time $T_0$ of the light from the illumination device (5) via the object (1) through to the sensor (4), and also a corresponding distance value are calculated for each pixel.

3. Method according to Claim 1 or 2, wherein the individual method steps for obtaining a sensor signal are in each case repeated a number of times, and the resultant signals for each individual pixel are integrated and the read-out, storage and evaluation of the sensor signals ensue only after the multiple exposure.

4. Method according to one of the preceding claims, wherein stored values are digitized.

5. Method according to either of Claims 3 and 4, wherein an adaptive setting to the respective reflectivity of an object (1) takes place by the number of multiple exposures being increased until, in a predetermined quantity of pixels of the overall image, the integrated intensity values at $T_1$ and at $T_2$ approach saturation.

6. Method according to Claim 5, wherein the number of multiple exposures for the intensity of the laser radiation is increased until, for each individual pixel of the overall image, at $T_1$ and at $T_2$ the individual integrated intensity values approach saturation.

7. Method according to Claim 5 or 6, wherein the integrated sensor signal is read out in random pixel access for each individual pixel or for a segment of pixels, in which case a segment may be a line of the optoelectronic image sensor.

8. Method according to one of the preceding claims, a spatial object (1) being illuminated by means of a plurality of light sources (10) that partially illuminate the object, these light sources (10) are activated serially and the evaluation correspondingly takes place during the respective illumination.

9. Method according to one of the preceding claims, wherein the integration time can be set pixel by pixel.

10. Method according to one of Claims 1 or 3 to 9, wherein, for simultaneous or subsequent normalization of the surface reflection of the object (1), in addition all the backscattered light pulses (3) are completely detected with a long integration time $\Delta_B \gg \Delta_L$.

11. Method according to one of Claims 1 or 3 to 10, wherein the beginning of an integration time $\Delta_A; \Delta_B$ is connected with a trigger pulse delay with respect to the emission pulse.

12. Method according to one of Claims 1 or 3 to 11, wherein an integration time $\Delta_A$ is less than 100 ns.

13. Method according to one of Claims 1 or 3 to 12, wherein an integration time $\Delta_B$ is approximately 1 µs.

14. Method according to one of the preceding claims, wherein a light pulse length is less than 100 ns.

15. Method according to one of the preceding claims, wherein different integration times $\Delta_A$ and $\Delta_B$, respectively, or $T_1$ and $T_2$, respectively, are set line by line in order to simultaneously record a three-dimensional image and a grey-scale image on the sensor 14).

16. Method according to one of the preceding claims, wherein different integration times $\Delta_A$ and $\Delta_B$, or $T_1$ and $T_2$, respectively, are alternately set pixel by pixel in order to simultaneously record a three-dimensional and a grey-scale image on the sensor (4).

17. Method according to one of the preceding claims, wherein the object (1) is illuminated with light pulses from a laser or a pulsed light-emitting diode.

18. Method according to one of the preceding claims, wherein the sensor (4) can be read out randomly.

19. Method according to one of the preceding claims, wherein the sensor (4) is a CMOS sensor.

20. Method according to one of the preceding claims, wherein the distance from the sensor (4) to at least one point is known as a reference distance.

21. Method according to Claim 20, wherein, in the event of use in a vehicle, a reference point is positioned on the door frame.

22. Method according to one of the preceding claims, wherein an identification of static objects and/or of movement sequences is performed.

23. Method according to Claim 22, wherein objects are monitored, such as articles or persons in spaces or in vehicles.

24. Method according to Claim 22, wherein vehicles or crane installations are monitored and/or wherein a general position determination is performed in a navigation system.

25. Method according to Claim 22 or 23, wherein a seat occupancy and/or a seat position of, for example, a person in a vehicle is identified.

26. Apparatus for recording a three-dimensional distance image comprising:

   - an illumination device (5), which emits light pulses (2) onto an object (1) via an optical arrangement (6),
   - an optoelectronic sensor (4) with an upstream optical arrangement (7), which detects the light pulses (3) backscattered from the object (1), the sensor (4) being constructed in pixel-resolving fashion by virtue of a multiplicity of pixel elements (9) and being able to be read out randomly and it being possible to set an integration time pixel by pixel,
   - a trigger device (8) for temporal coordination between illumination device (5) and sensor (4),
   - a computing unit for calculating a three-dimensional image from corresponding charges of the pixel elements (9) of the sensor (4).

27. Apparatus according to Claim 26, wherein a short integration time $\Delta_A$ and $T_1$, respectively, and a long integration time $\Delta_B$ and $T_2$, respectively, is set alternately line by line or column by column at the pixel elements (9) of the sensor (4).

28. Apparatus according to Claim 26, wherein short and long integration times $\Delta_A$ and $\Delta_B$, respectively, or $T_1$ and $T_2$, respectively, are set alternately at the pixel elements (9) of the sensor (4).

29. Apparatus according to one of Claims 26 to 28, wherein the computing unit is arranged on the sensor (4)

**Revendications**

1. Procédé d'enregistrement d'une image tridimensionnelle de distance d'objets dans l'espace par recours à un détecteur optoélectronique (4) qui permet la résolution d'une image en points, avec un intégrateur électronique de courte durée présent sur chaque élément de point d'image (9), la durée de l'intégration étant ajustable, lequel procédé est constitué des étapes suivantes:

   - l'objet (1) est éclairé par au moins une impulsion lumineuse (2) de durée $\Delta_L$ prédéterminée,
   - les impulsions lumineuses (3) diffusées par les points d'objet (G) sont détectées sur des points d'image associés du détecteur (4) pendant une courte durée d'intégration prédéterminée $\Delta_A$, $\Delta_A \leq \Delta_L$, l'instant du début de la durée d'intégration $\Delta_A$ étant situé avant l'incidence de la première impulsion lumineuse (3) diffusée en retour et qui correspond au point d'objet (G) suivant,

- des valeurs de distance sont déterminées à partir des différentes intensités enregistrées des impulsions lumineuses (3) diffusées en retour, qui résultent de leurs différents temps de parcours.

2. Procédé d'enregistrement d'une image tridimensionnelle de distance d'objets dans l'espace par recours à un détecteur optoélectronique (4) qui permet la résolution d'une image en points avec un intégrateur électronique de courte durée présent sur chaque élément de point d'image (9), la durée d'intégration étant ajustable, le procédé étant constitué des étapes suivantes:

- enregistrement et intégration du signal de détection qui représente un courant de fond et la lumière environnante avant le début de l'enregistrement et de l'intégration jusqu'à une durée d'intégration $T_2$ prédéterminée,
- début de l'éclairage d'un objet (1) par un dispositif d'éclairage (5) en même temps que le début de l'enregistrement et de l'intégration du signal de détection sur le détecteur (4), l'intégration de la lumière reçue sur le détecteur (4) pendant une augmentation de l'intensité lumineuse étant réalisée pendant une durée $T_1$, $T_1$ étant inférieure à $T_2$,
- éclairage répété de l'objet (1) par le dispositif d'éclairage (5) avec début de l'enregistrement simultané à celui de l'intégration du signal de détection sur le détecteur (4), la lumière reçue sur le détecteur (4) pendant l'augmentation de l'intensité lumineuse étant intégrée pendant la durée $T_2$,
- aux instants $T_1$ et $T_2$, la valeur intégrée du signal de détection est lue et conservée en mémoire et
- à partir des valeurs mises en mémoire, pour chaque point d'image, le temps de parcours $T_0$ de la lumière depuis le dispositif d'éclairage (5) jusqu'au détecteur (4) en passant par l'objet (1) est calculé, de même que la valeur correspondante de la distance.

3. Procédé selon les revendications 1 ou 2, dans lequel les étapes individuelles du procédé sont répétées plusieurs fois pour obtenir un signal de détection et les signaux qui en résultent sont intégrés pour chaque point d'image individuel et la lecture, la mise en mémoire et l'évaluation des signaux de détection ne commencent qu'après que l'éclairage multiple est terminé.

4. Procédé selon l'une des revendications précédentes, dans lequel les valeurs conservées en mémoire sont numérisées.

5. Procédé selon l'une des revendications 3 ou 4, dans lequel un ajustement adaptatif à la réflectivité d'un objet (1) s'effectue en augmentant le nombre des éclairages multiples jusqu'à ce que pour une quantité prédéterminée de points d'image de l'image globale, les valeurs d'intensité intégrées en $T_1$ et $T_2$ s'approchent d'une saturation.

6. Procédé selon la revendication 5, dans lequel le nombre des éclairages multiples ou l'intensité du faisceau laser sont augmentés jusqu'à ce que pour chaque point d'image individuel de l'image globale, les valeurs d'intensité intégrées individuelles en $T_1$ et en $T_2$ s'approchent de la saturation.

7. Procédé selon les revendications 5 ou 6, dans lequel le signal de détection intégré est lu par accès sélectif à chaque point d'image ou à un segment de points d'image, un segment pouvant être une ligne du détecteur optoélectronique d'image.

8. Procédé selon l'une des revendications précédentes, dans lequel un objet (1) dans l'espace est éclairé au moyen de plusieurs sources de lumière (10) qui éclairent partiellement l'objet, ces sources de lumière (10) étant activées en série et l'évaluation ayant lieu de manière appropriée lors de chaque éclairage.

9. Procédé selon l'une des revendications précédentes, dans lequel la durée d'intégration peut être ajustée point d'image par point d'image.

10. Procédé selon l'une des revendications 1 ou 3 à 9, dans lequel pour normaliser simultanément ou successivement la réflexion par la surface de l'objet (1), on détecte de plus complètement la totalité des impulsions lumineuses (3) diffusées en retour avec une longue durée d'intégration $\Delta_B \gg \Delta_L$.

11. Procédé selon l'une des revendications 1 ou 3 à 10, dans lequel le début d'une durée d'intégration $\Delta_A$; $\Delta_B$ est associée à un retard de l'impulsion de déclenchement par rapport à l'impulsion émise.

12. Procédé selon l'une des revendications 1 ou 3 à 11, dans lequel la durée d'intégration $\Delta_A$ est inférieure à 100 ns.

**13.** Procédé selon l'une des revendications 1 ou 3 à 12, dans lequel la durée d'intégration $\Delta_B$ vaut environ 1 µs.

**14.** Procédé selon l'une des revendications précédentes, dans lequel une impulsion lumineuse présente une longueur inférieure à 100 ns.

**15.** Procédé selon l'une des revendications précédentes, dans lequel, pour l'enregistrement simultané d'une image tridimensionnelle et d'une image de valeurs de gris, on règle sur le détecteur (4) différentes durées d'intégration $\Delta_A$ resp. $\Delta_B$ ou $T_1$ resp. $T_2$ par ligne.

**16.** Procédé selon l'une des revendications précédentes, dans lequel pour l'enregistrement simultané d'une image tridimensionnelle et d'une image de valeurs de gris, on règle sur le détecteur (4), point d'image par point d'image, différentes durées alternées d'intégration $\Delta_A$ resp. $\Delta_B$ ou $T_1$ resp. $T_2$.

**17.** Procédé selon l'une des revendications précédentes, dans lequel l'objet (1) est éclairé par des impulsions lumineuses d'un laser ou d'une diode lumineuse pulsée.

**18.** Procédé selon l'une des revendications précédentes, dans lequel le détecteur (4) peut être lu facultativement.

**19.** Procédé selon l'une des revendications précédentes, dans lequel le détecteur (4) est un détecteur CMOS.

**20.** Procédé selon l'une des revendications précédentes, dans lequel la distance entre le détecteur (4) et au moins un point est connue et sert de distance de référence.

**21.** Procédé selon la revendication 20, dans lequel un point de référence est placé sur l'encadrement de porte lorsqu'il est utilisé dans un véhicule.

**22.** Procédé selon l'une des revendications précédentes, dans lequel on effectue une détection d'objets statiques et/ou de déroulements de mouvements.

**23.** Procédé selon la revendication 22, dans lequel on surveille des objets, par exemple des objets ou des personnes dans des locaux ou dans des véhicules.

**24.** Procédé selon la revendication 22, dans lequel on surveille des véhicules ou des installations de grue et/ou dans lequel on entreprend une détermination globale de position dans un système de navigation.

**25.** Procédé selon la revendication 22 ou 23, dans lequel on détecte l'occupation d'un siège et/ou une position assise, par exemple d'une personne dans un véhicule.

**26.** Dispositif pour l'enregistrement d'une image tridimensionnelle de distance, constitué de:

- un dispositif d'éclairage (5) qui envoie des impulsions lumineuses (2) par une optique (6) sur un objet (1),
- un détecteur optoélectronique (4) précédé par une optique (7) et qui détecte les impulsions lumineuses (3) diffusées en retour par l'objet (1), le détecteur (4) étant constitué d'une pluralité d'éléments de points d'image pour permettre une résolution par point d'image et pouvant être lu facultativement, la durée d'intégration pouvant être réglée point d'image par point d'image,
- un dispositif de déclenchement (8) pour accorder dans le temps le dispositif d'éclairage (5) et le détecteur (4),
- une unité de calcul pour le calcul d'une image tridimensionnelle à partir des charges correspondantes des éléments (9) de points d'image du détecteur (4).

**27.** Dispositif selon la revendication 26, dans lequel une courte durée d'intégration $\Delta_A$ resp. $T_1$ et une longue durée d'intégration $\Delta_B$ resp. $T_2$ sont réglées en alternance, par ligne ou par colonne d'éléments (9) de points d'image du détecteur (4).

**28.** Dispositif selon la revendication 26, dans lequel de courtes et de longues durées d'intégration $\Delta_A$ resp. $\Delta_B$ ou $T_1$ resp. $T_2$ sont réglées en alternance sur les éléments (9) de points d'image du détecteur (4).

**29.** Dispositif selon l'une des revendications 26 à 28, dans lequel l'unité de calcul est disposée sur le détecteur (4).

**FIG 1**

Beleuchtungseinrichtung 5

LED- oder
Laserdiode

Ausgesandter Lichtimpuls 2
der Länge $\Delta_L$ und Intensität $I_0$

2

6

Elektronischer
Triggergeber — 8

Objektpunkt G

7

CMOS Sensor
mit wahlfreiem
Bildpunkt- Zugriff,
einstellbarer
Integrationszeit $\Delta_{A;B}$

Vom Objekt zurückgestreuter
Lichtpuls 3 der Länge $\Delta_L$
Lichtlaufzeit $T_0 = R/V_C$

9

4

1

Objektabstand R

# FIG 2

Integrationsfenster $\Delta_A$ bzw. $\Delta_B$ CMOS Bildpunktes

Zeitverzögerte Messung eines Lichtimpulses $\Delta_L$ mit Laufzeit $\tau_1 = 2R_1/V_C$

Zeitverzögerte Messung eines Lichtimpulses $\Delta_L$ mit Laufzeit $\tau_2 = 2R_2/V_C$
$R_2 > R_1$

EP 1 040 366 B1

# FIG 3

CMOS Sensor mit zeilenweise
unterschiedlicher Integrationszeit
für Bildpunkt A, B.

| A | A | A | A | A | A | A |
| B | B | B | B | B | B | B |
| A | A | A | A | A | A | A |
| B | B | B | B | B | B | B |
| A | A | A | A | A | A | A |
| B | B | B | B | B | B | B |
| A | A | A | A | A | A | A |

4

CMOS Sensor mit pixelweise
unterschiedlicher integrationszeit
für Bildpunkt A, B.

| | | | ··· | | | |
| ··· | A | B | A | B | A | ··· |
| ··· | B | A | B | A | B | ··· |
| ··· | A | B | A | B | A | ··· |
| ··· | B | A | B | A | B | ··· |
| ··· | A | B | A | B | A | ··· |
| | | | ··· | | | |

Bildpunkt A: Kurze Integrationszeit $\Delta_A \leq \Delta_L$
Bildpunkt B: Lange Integrationszeit $\Delta_B >> \Delta_L$

Intensitätsbild :
Zeilenweise Auslesen der Bildpunkte B

3D Abstandsbild :
Zeilenweise Differenzbildung und Normierung
(Bildpunkt A -Bildpunkt B)/Bildpunkt B

Intensitätsbild :
Pixelweises Auslesen der Bildpunkte B

3D Abstandsbild :
Pixelweise Differenzbildung und Normierung
(Bildpunkt A -Bildpunkt B)/Bildpunkt B

EP 1 040 366 B1

Axiale LED- oder Laserdioden
Infrarotbeleuchtung mit Lichtimpulsen
von typ. 50 nsec

3D CMOS Sensor

Nettovolumen einer
sitzenden Person (Schnittkurve)

3D Abstandswerte $R_0$
bei nicht besetztem Sitz

3D Abstandswerte $R_P$
einer sitzenden Person

FIG 4

EP 1 040 366 B1

## FIG 5

Laserdiode, sendeseitig

$U_2$

$\Delta U$

$U_1$

$U_D$

$$T_0 = \frac{U_1 \, \Delta T - \Delta U \, T_1}{U_D \frac{\Delta T}{T_2} - \Delta U}$$

$T_0$    $T_1 \leftarrow \Delta T \rightarrow T_2$    t

## FIG 6A

Laserdiode                    beispielsweise für $T_1$ und $U_1$

t

## FIG 6B

$T_1$    $T_1$    $T_1$

$\overline{U}_1$

$U_D$

$T_0$    $T_0$    $T_0$    t

Beleuchtungs-
stärke

# FIG 7

Laufzeit je Objektpunkt

Sendeimpuls

$T_0$

Laserpuls($\Delta T = 60ns$)
empfangsseitig

Zeit t

Kurzzeitshutter (60 ns)

Langzeitshutter $>>$ Laserpulszeit

t

Integriertes
Sensorsignal $\underline{U}$

$\Delta_B$

$\Delta_L$

$\Delta_A$

Meßsignal

$M_B$

$U_{ges}$   $M_A$

$D_B$

$U_P = M_A - U_A$
$D_B = M_B - U_B$

$U_P$

Photostromanteil

$U_A$

$U_B$

Dunkelstromanteil
+Fremdlichtanteil

t

$T_0 = 2R / V_c$

<u>Differenzverfahren:</u>
Laufzeit $T_0 = U_p / U_{ges} \times \Delta_A$

# FIG 8

Beleuchtungs-stärke

Laufzeit je Objektpunkt

Sendeimpuls

$T_0$

Laserpuls($\Delta T = 60ns$) empfangsseitig

Zeit t

Kurzzeitshutter
30 ns    60 ns

t

Integriertes Sensor-signal U

Meßsignal

$U_2$

Photostromanteil

Dunkelstromanteil +Fremdlichtanteil

$T_1$

$T_0 = 2R / V_c$    $T_2$

t

Interpolationsverfahren:
Laufzeit $T_0$ = Schnittpunkt aus Meßsignal mit Kurve für (Dunkelstrom +Umgebungslicht)

# FIG 9